# EUROPEAN PATENT SPECIFICATION

(11) **EP 3 818 337 B1**
(45) Date of publication and mention of the grant of the patent: **17.01.2024**
(21) Application number: 19829821.8
(22) Date of filing: 02.07.2019
(51) Int. Cl.: G05D 1/10

(54) **DEFECT DETECTION SYSTEM USING A CAMERA EQUIPPED UAV FOR BUILDING FACADES ON COMPLEX ASSET GEOMETRY WITH OPTIMAL AUTOMATIC OBSTACLE DECONFLICTED FLIGHTPATH**
DEFEKTDETEKTIONSSYSTEM UNTER VERWENDUNG EINER KAMERABESTÜCKTEN DROHNE FÜR GEBÄUDEFASSADEN AN KOMPLEXER ASSET-GEOMETRIE MIT OPTIMALEM FLUGWEG MIT AUTOMATISCHEM AUSWEICHEN VON HINDERNISSEN
SYSTÈME DE DÉTECTION DE DÉFAUTS UTILISANT UNE CAMÉRA ÉQUIPÉE D'UN UAV POUR CONSTRUIRE DES FAÇADES SUR UNE GÉOMÉTRIE D'ACTIF COMPLEXE AVEC UNE TRAJECTOIRE DE VOL SANS CONFLIT D'OBSTACLE AUTOMATIQUE OPTIMALE

(30) Priority: 04.07.2018 WO PCT/IB2018/054939; 10.04.2019 SG 10201903213R
(43) Date of publication of application: 12.05.2021
(73) Proprietor: H3 Dynamics Pte. Ltd., Singapore 139950 (SG); Jurong Town Corporation, Singapore 609434 (SG)
(72) Inventor: KOO, Tao Wei, Shaun, Singapore 139950 (SG); DONG, Wenjuan, Singapore 609434 (SG); YONG, See Wei, Singapore 139950 (SG); SOH, Cheng Lock, Donny, Singapore 139950 (SG); RUBIO, Jaime, Singapore 139950 (SG)
(74) Representative: Schweiger, Martin
(86) International application number: PCT/IB2019/055617
(87) International publication number: WO 2020/008344

(56) References cited:
- AU-A1- 2016 201 290
- CN-A- 102 419 598
- US-A1- 2014 168 420
- US-A1- 2014 168 420
- US-A1- 2017 206 414
- US-A1- 2017 336 806
- US-A1- 2017 337 824
- US-A1- 2018 170 540
- ALMADHOUN RANDA ET AL: "GPU accelerated coverage path planning optimized for accuracy in robotic inspection applications", 2016 IEEE 59TH INTERNATIONAL MIDWEST SYMPOSIUM ON CIRCUITS AND SYSTEMS (MWSCAS), IEEE, vol. 1, no. 1, 16 October 2016 (2016-10-16), pages 1-4, XP033072892, DOI: 10.1109/MWSCAS.2016.7869968 [retrieved on 2017-03-02]

## Description

US 2014/168420 A1 shows a camera assembly arranged on an unmanned and autonomously navigating aerial vehicle that is employed to inspect a surface area of for material defects.

US 2017/337824 A1 also discloses a drone for taking images of a surface. It discloses 60% side overlap and 50% forward overlap of successively taken images.

AU 2016 201 290 A1 relates to an unmanned aerial vehicle (UAV) for inspecting infrastructure. The UAV includes a drone, and a navigation system including one or more sensors for sensing the infrastructure. The navigation system navigates the drone relative to the sensed infrastructure. The UAV further includes an inspection system transported by the navigated drone and for inspecting the infrastructure.

In a first aspect, the specification discloses an unmanned aerial vehicle (UAV) for detecting defects (a building flaw or design mistake that reduces the value of the building, and causes a dangerous condition; list of defects include Paint-peeling, concrete cracks, wall tile cracks, water ponding, water stains, buckling, concrete spalling, loose sealant, tile delamination, glass crack, rust, wall opening, block/brick wall crack, surface discoloration, mold on façade rubber gasket, molding, sealant discoloration, etc. non-exhaustive ) in an outer wall of a building. Preferentially, the UAV is provided by an electrically driven rotary wing UAV, which comprises propellers. The UAV refers in particular to small size drones or drone boxes, such as small size multicopters, quadcopters.

The UAV comprises a propulsion means for flying the UAV, which can be provided by two or more propellers and electric motor which are connected to the propellers. The propulsion means is connected to an energy source of the UAV. In particular, the energy source can be an electric energy source such as an electric battery, fuel cell, hybrid battery/fuel cell, or any other power generator systems/methods that produce electrical energy needed to propel/move the UAV platform.

Furthermore, the UAV comprises a digital camera for capturing picture or video of the wall and a data storage for storing the pictures captured by the digital camera, which may be provided as part of the digital camera. The data storage can be provided by a computer memory, for example a magnetic or a semiconductor-based memory or any other type of computer memory. The digital camera can be provided with a visible light sensor, but also with a radar sensor, an infrared sensor, an acoustic transducer or any other type of image sensor which can provide an image or picture of a surface.

In particular, the digital camera can comprise an image sensor and a transmitter or an emitter for irradiating the wall surface. This allows to capture images of the surface wall even in poor lighting conditions. The emitter can be an emitter of acoustic, radar or infrared waves or it can also be provided by a light emitter.

Furthermore, the UAV can comprise further contactless sensors which provide complementary information to the image data. For example, a radar sensor can provide depth information to improve the defect identification or to provide more detailed information about specific features of the defect.

A flight control module of the UAV is operative to autonomously control the propulsion means based on image or video data of the at least one camera. In particular, a module of the UAV can be operative by means of a computer program in a computer storage of the UAV and/or by means of electronic circuitry of the UAV.

Furthermore, the flight control module may receive other position data, for example from a satellite navigation system of the UAV or from a wireless network navigation system. The flight module controls the propulsion means such that the UAV flies in front of the wall of the building along a pre-determined flight path. In particular, the propulsion means can be controlled such that the UAV flies in a predetermined distance and/or with a predetermined orientation to the wall.

An image capturing module of the UAV is operative to send control signals to the digital camera which cause the digital camera to capture pictures or video of the wall.

The flight control module is operative to control the propulsion means and the image capturing module is operative to control the digital camera such that adjacent pictures captured by the digital camera have an overlap that is a predetermined range, for example an overlap may be in the range of 5% to 10% or 5% to 20%. In one embodiment, the adjacent pictures are adjacent in a flight direction of the UAV.

In a simple implementation the flight control module controls the propulsion means to fly the UAV along the predetermined flight path and the image capturing module causes the digital camera to take pictures or video at suitable capturing positions.

A flightpath algorithm receives sensor information from the drone and calculates the optimal distance, image overlap, and obstacles of the complex asset geometry to provide safe flight as well as image taking accuracy and consistency. The algorithm automatically localises and crops the image for clarity.

The flightpath algorithm is also able to generate multiple optimised flightpaths of one to many complex asset geometries resulting in the production of swarming flight paths per complex asset or multiple complex assets.

The flight control module and the image capturing module are connected to an electric battery or any other suitable power source located on the UAV platform. In one embodiment, the propulsion means comprises electric motors and the electric battery (or another suitable power source on the UAV) provides the energy source to which the propulsion means is connected.

The control of the propulsion means can be based on a predicted/estimated flight path, on a real time analysis of image data or video data or on a combination of both. In the context of the specification, a picture refers especially to a rectangular contiguous area of image pixels or data derived therefrom. The image pixels correspond to sensor signals of light intensity sensors.

In one embodiment, the image capturing module is operative to control the at least one camera to capture pictures of the wall from pre-determined capturing positions, especially to capture one picture per capturing position.

In a further embodiment, the motor control module is operative to slow down or even to halt the movement of the UAV at the pre-determined image capturing positions.

In a specific embodiment, a distance between two adjacent capturing position is equal to an extension of a capturing area of a captured picture in a flight direction of the UAV minus a pre-determined overlap in the flight direction, wherein the predetermined overlap is within the pre-determined range.

According to a further embodiment, the motor control module controls the propulsion means such that the pre-determined flight path results in a corresponding scanning path, which comprises a meandering path. The meandering path in turn comprises capturing segments in a first direction and connecting segments in a second direction, the capturing segments being joined by the connecting segments.

The scanning path is formed by the location on the wall that corresponds to a centre location of an imaging surface on which a camera lens of the at least one camera projects.

In particular, the flight path can be provided by a meandering path that comprises capturing segments in a first direction and connecting segments in a second direction, the capturing segments being joined by the connecting segments.

Furthermore, the specification discloses a computer implemented method for controlling a UAV with at least one camera. According to this method a propulsion means of the UAV is controlled to move the UAV along a pre-determined flight path. Furthermore, the at least one camera is controlled to capture pictures of a wall of a building at or from pre-determined capturing locations, such that adjacent pictures of the captured pictures have an overlap that is within a predetermined range relative to a picture extension.

According to a further embodiment, the method comprises controlling the propulsion means to slow down or even halt the movement of the UAV at the pre-determined capturing positions.

According to a further embodiment, the method comprises controlling the propulsion means such that a distance between two adjacent capturing positions is equal to an extension of a capturing area of a captured picture in a flight direction of the UAV minus a pre-determined overlap in the flight direction, wherein the predetermined overlap is within the pre-determined range.

According to a yet a further embodiment, the method comprises controlling the propulsion means such that the pre-determined flight path results in a corresponding scanning path. The scanning path comprises a meandering path, which in turn comprises capturing segments in a first direction and connecting segments in a second direction. The capturing segments are joined by the connecting segments.

According to a further aspect, the current specification discloses a device for detecting defects in image data of a UAV camera with a first data storage for storing the image data, a processing means for processing the image data, and a second data storage for storing processed image data.

The processing means is operative to identify a first defect in a first picture and to identify a second defect in a second picture, wherein the first picture overlaps with the second picture, and wherein the processing means is furthermore operative to identify whether the first defect and the second defect form part of the same defect.

Furthermore, the present specification discloses a computer implemented method for detecting defects in image data of a UAV camera. The image data comprises a plurality of pictures captured by the UAV camera.

According to this method a first defect is detected in a first picture of the plurality of pictures, and a second defect is detected in a second picture of the plurality of pictures, the second picture being adjacent to the first picture.

Furthermore, the method comprises identifying whether the first defect and the second defect form part of the same defect.

According to an embodiment, the detection of the first defect and of the second defect comprises presenting the respective first or second picture to a neural network and deriving from the output of the neural network whether a set of pixels of the respective picture corresponds to a defect.

According to a further embodiment, the detection of the first defect and of the second defect comprises inputting the respective first or second picture to a support vector machine and deriving from the output of the support vector machine whether a set of pixels of the respective picture corresponds to a defect.

According to a further embodiment, the detection of the first defect and of the second defect comprises inputting the respective first or second picture to a nearest neighbour classifier and deriving from the output of the nearest neighbour classifier whether a set of pixels of the respective picture corresponds to a defect.

In a further aspect, the present specification discloses an image data management system for managing image data of an unmanned aerial vehicle. The system comprises three components which are related to data acquisition, management and client interface, respectively.

In particular, the management of the image data comprises the optimization, acquisition, storage and distribution of the image data, wherein the image data relates to pictures of a digital camera of the UAV, pictures of an image capturing sensor, or video file from an image recording device. More specifically, the image data management system comprises a data acquisition module, data optimization module, a data processing module, a data compilation module, and a client module.

The data processing module and the data compilation module are provided on one or more server computers, while the client module is provided on a client device.

The client module is operative to receive client input data relating to an object to be scanned for defects, to a time interval between successive scans of the object, and to a type of output data, and to forward the client input data to the data compilation module.

The data compilation module is operative to store the client input data as configuration data. The data acquisition module is operative to trigger a UAV to perform scans of the object at predetermined times and to transmit image data of the object scans to the data acquisition module.

According to a further embodiment, the client module is furthermore operative to establish a data link with the server computer and to request output data from the data compilation module.

Moreover, the present specification discloses a client software application for performing surface scans with an unmanned aerial vehicle (UAV). The software application can be embodied by a set of computer readable instructions on a computer readable storage medium. The client software application is operative to submit a scan request over a communication network, which may wireless or wired or a combination thereof.

The scan request comprises data specifying parameters relating to the surface scan and the retrieved data, such as a location to be scanned, a pre-determined scan interval and a type of data to be retrieved.

Furthermore, the client software application is operative to retrieve image data of the surface scan in accordance with a previous scan request over the same or over a different communication network. The data retrieval can be a push retrieval that is initiated by a remote computer or a pull retrieval, which is initiated by the client software application. The present application also discloses a portable client device with a computer readable memory, which comprises the client software application.

The subject matter of the present specification is now explained in further detail with reference to the below mentioned Figures, in which
- Figure 1: shows a defect detecting UAV flying along a calibration path during a calibration procedure,
- Figure 2: shows the defect detecting UAV of Fig. 1 flying along a flight path during a scan procedure,
- Figure 3: shows an enlarged section of the flight path of Fig. 2 indicating captured pictures of the building façade,
- Figure 4: shows a schematic layout of the UAV of Fig. 1,
- Figure 5: shows a calibration procedure of the UAV of Fig. 1,
- Figure 6: shows a wall scanning procedure of the UAV of Fig. 1,
- Figure 7: shows a system for the acquisition, storage and distribution of defect data,
- Figure 8: shows a vertical defect in a wall plaster,
- Figure 9: shows a vertical and a diagonal defect in a concrete wall,
- Figure 10: shows a vertical and a diagonal defect in a masonry wall,
- Figure 11: shows a learning curve of a semi-supervised learning procedure on the basis of defect data,
- Figure 12: shows a first flight path that is adapted to features of a building, and
- Figure 13: shows a second flight path that is adapted to the features of the building.

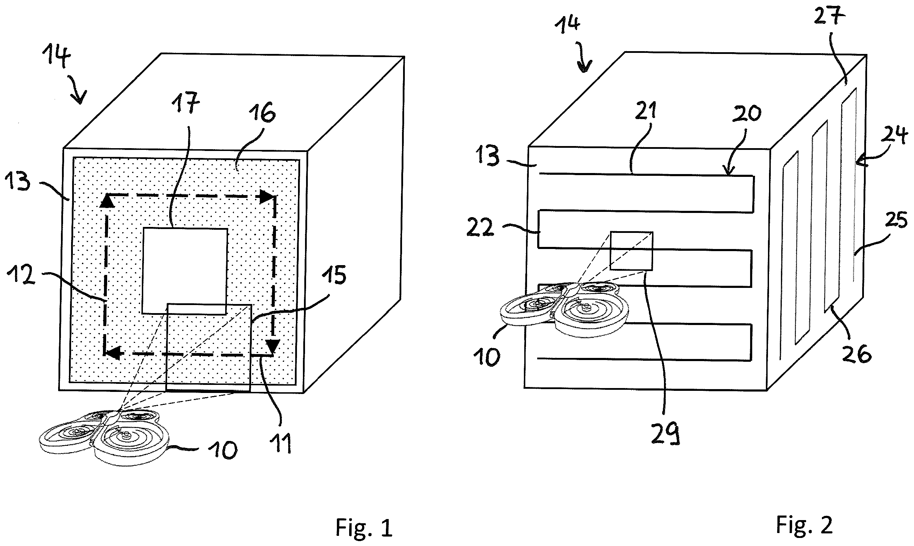

Fig. 1 shows a defect detecting unmanned aerial vehicle (UAV) 10 which flies along a calibration path 11 during a calibration procedure. The calibration path 11 of the UAV 10 is indicated by dashed arrows. The dashed arrows 12 indicate a vertical projection of segments of the UAV's flight path 11 onto an outer wall 13 of a multi-level building 14.

During the calibration procedure, the UAV 10 moves in front of the outer wall 13. A camera of the UAV 10, which is not shown in Fig. 1, is directed towards the building wall 13 and captures a rectangular area 15 which is indicated in Fig. 1.

A dotted region 16 of the building wall 13 indicates a scan area of the building wall 13 which is to be scanned for defects. A rectangular region 17 inside the dotted region indicates a no-scan area which does not require scanning for defects. For example, the no-scan area may comprise a glass façade which does not have defects to be investigated.

The scan area 16 and the no-scan area 17 of Fig. 1 are computed based on image data taken during the calibration process of Fig. 1. Preferentially, the computation of the scan areas and the no-scan areas is carried out by a processor of the UAV 10. Furthermore, the computation of the flight paths of Fig. 2 is preferentially carried out by the processor of the UAV 10. In this way, the UAV 10 can directly proceed to the scan phase of Fig. 2 without the need of a data transfer to a ground station.

In the example of Fig. 1, the UAV 10 is provided by a quadcopter as a preferred example, though the subject matter of the present specification is not limited to a specific type of UAV. The quadcopter is equipped with a digital camera, electronics for controlling the digital camera and for controlling electric motors of the quadcopter and for evaluating image data taken by the digital camera.

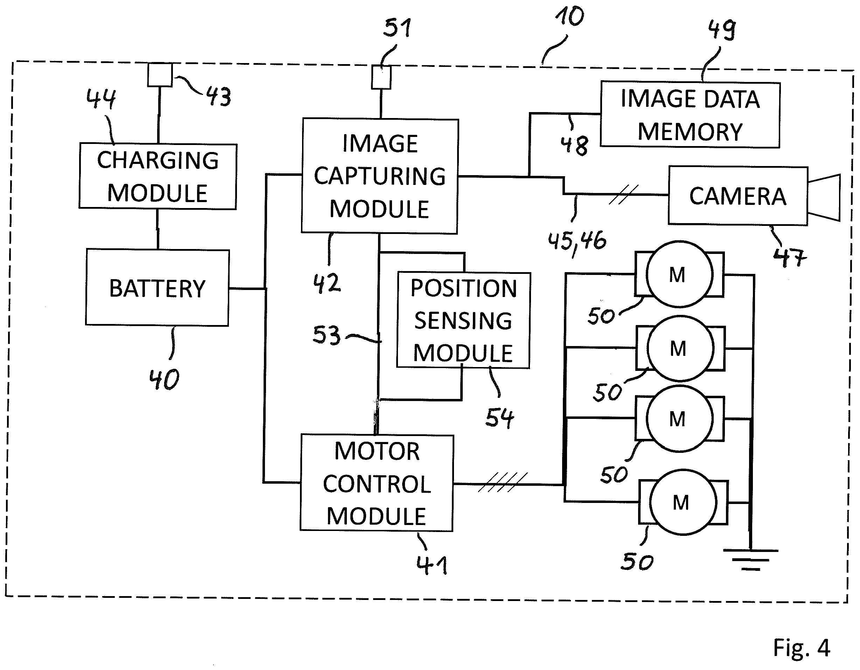

The abovementioned components of the UAV 10 are illustrated in more detail in Fig. 4. The calibration process of Fig. 1 is illustrated in further detail by the flow diagram of Fig. 4.

Fig. 2 shows the defect detecting UAV 10 of Fig. 1 flying along a first flight path 20 during a scan procedure. The first flight path 20, which is indicated on the building wall 13, has the form of a meandering line and consists of horizontal capturing segments 21 connected by vertical connection segments 22.

A rectangular capturing area 29 of the UAV 10 is indicated on the building wall 13. The distance of the UAV 10 to the building wall 13 during the scan procedure, which his shown in Fig. 2, is smaller than the distance of the UAV 10 to the building wall 13 during the calibration procedure, which is shown in Fig. 1.

A second flight path 24, which has vertical capturing segments 25 connected by horizontal connection segments 26, is indicated on a second building wall 27 by a meandering line 24. Similar to Fig. 1, the lines indicate a vertical projection of the UAV's flight path onto the building wall 27.

A flight path with horizontal capturing segments is in many situations less energy consuming and preferable over a flight path with vertical capturing segments. However, there are also situation in which a flight path with vertical capturing segments may be preferable, for example when the height of the building is much larger than the width. In general, a flight path with alternating horizontal and vertical segments, such as the flight paths shown in Fig. 2, can provide a convenient combination or stitching of adjacent pictures.

More in general, the paths 11, 20, and 24 of Fig. 1 and Fig. 2 can also refer to a scanning path instead of a flight path. In a case where the UAV 10 deviates from a pre-determined flight path, for example due to wind influence or due to avoidance of obstacles, the UAV 10 may compensate for such deviations by adjusting the alignment and the magnification of the camera such that a pre-determined scanning path is maintained within a given accuracy. Furthermore, a predetermined scanning path 20, 24 can be achieved through a combination of UAV 10 and camera movement.

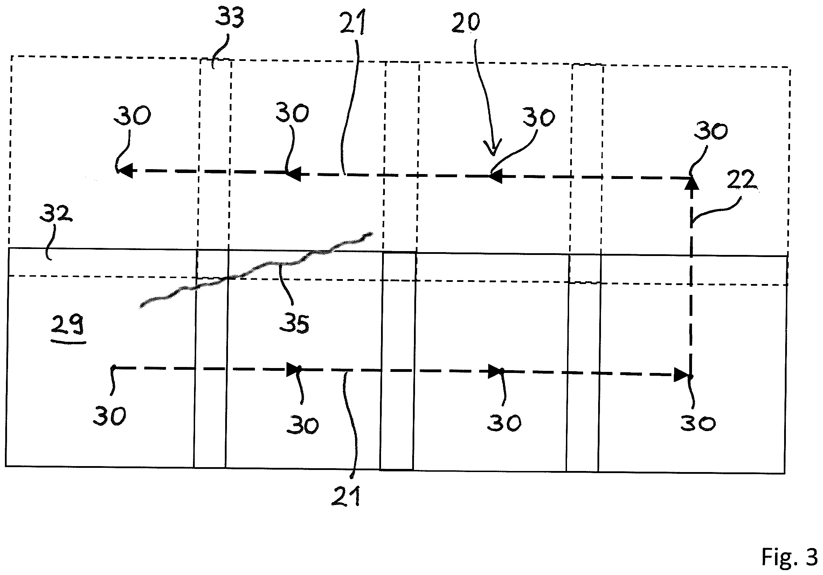

Fig. 3 shows a sectional enlargement of the first flight path 20, in which image capturing areas 29 and successive image capturing positions 30 of the UAV are indicated. Furthermore, Fig. 3 shows horizontal overlap regions 23 and vertical overlap regions 33 between the image capturing areas 29. For clarity reasons, only one of the capturing areas 29 and of the overlap regions 32, 33 is labelled.

A defect 35 of the building wall 13 extends over a first, a second and a third capturing area 29 and over a horizontal overlap region 32, a vertical overlap region 33 and a further horizontal overlap region 32 between adjacent capturing areas 29.

Experiments have shown that an overlap of between 5% - 10% of the respective extension of the capturing areas can help avoid that a defect appearing on more than one picture is identified as multiple defects as compared to a larger overlap of more than 10%.

Fig. 4 shows a schematic layout of the UAV 10 of Fig. 1. A UAV battery 40 is connected to a motor control module 41 and to an image capturing module 42. Furthermore, the battery 40 is connected to a charging connector 43 via a charging module 44. A control line 45 and a data line 46 of the image capturing module 42 are connected to a camera 47 of the UAV 10 and a data line 48 of the image capturing module 42 is connected to an image data memory 49. By way of example, the image data memory 49 may be provided by semiconductor memory or a magnetic disk.

The motor control module 41 is connected to four motors 50 of the UAV 10. More specifically, power electronics of the motor control module, which is not shown in Fig. 4, is connected to the motors 50. Furthermore, the motor control module 41 comprises processing means for computing motor control signals.

The image capturing module 42 is connected to a data transfer connector 51, for example a USB connector or any other type of connector that has data transfer functionality. The image capturing module 42 and the motor control module 41 are connected by a further data line 53. The image capturing module 42 comprises processing means for deriving control signals to the camera and for evaluating and storing data of the camera 47.

A position sensing module 54 is connected to the motor control module 41 and to the image capturing module 42. The position sensing module 54 comprises a position sensor, such as GPS receiver or any other type of position sensor, an orientation sensor, and processing means for determining a position and an orientation of the UAV 10. The position sensor can also be provided by an image sensor of the digital camera.

In particular, the position sensor can be provided by a sensor that does not rely on a satellite navigation system, which is advantageous in areas in which access to a satellite navigation system is not available or is denied, such as a wireless network positioning sensor or a position sensor that comprises a radar sensor, an infrared sensor, an acoustic sensor, a camera sensor or any combination thereof.

In areas, in which access to GPS or other satellite position systems are unavailable or access is denied, it is advantageous to provide position sensors which can function independently from a satellite navigation system. Similarly, it can be advantageous to provide position sensors which do not depend on the availability of a wireless data link.

The processing means of the image capturing module, of the position sensing module and of the motor control module are not shown in Fig. 4. By way of example, the processing means can be implemented by one or more microprocessors or one or more application specific integrated chips (ASICS).

The embodiment of Fig. 4 is provided by way of example. The subject matter of the present specification is not limited to the example of Fig. 4. The number of motors is purely given as an example. For example, the UAV may be provided with a multicopter having two, three, four, five or more motors. Furthermore, the functionality of the UAV may be provided by other arrangements of modules which are different from the example of Fig. 4.

In a further embodiment, which is not shown in Fig. 4, the UAV is provided with a transmitter and a corresponding wireless communication module for transfer of data over a wireless communication link. Thereby, image data can be transferred from and to the UAV even when the UAV is flying. The wireless communication module may also provide further functionality such as a remote control of the UAV.

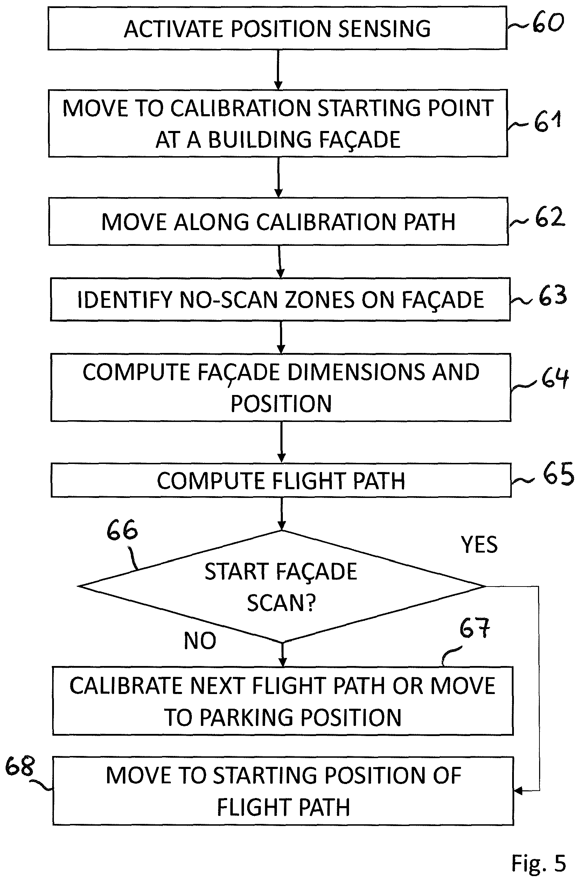

Fig. 5 shows a calibration procedure of the UAV of Fig. 1.

In a first step 60, the UAV 10 activates a position sensing means of the position sensing module, such as a GPS receiver.

In a next step 61, the UAV 10 moves to a calibration starting point. In a further step 62, the UAV 10 moves along a calibration path 11. In the example of Fig. 1, the calibration path 11 is aligned to the boundaries and the corners of the building wall and comprises four segments 12 which are each parallel to the boundaries or edges of the building wall.

In the flow diagram of Fig. 5, the building wall 13 is referred to as "building façade", which takes into account a possible three-dimensional structure, such as windows, columns, jutties, balconies, piping, etc. Preferentially, the building wall 13 is essentially flat, but it may also comprise protrusions, openings, and recesses.

In the example of Fig. 1, the rectangular calibration path 11 is sufficient to cover a required surface of the building wall 13 with the camera 47 at the selected distance to the building wall 13 and for the given size of the building wall 13. For other configurations, the calibration path 11 may include further rectangular paths, which are nested inside the outer rectangular path and which have successively smaller diameters. Depending on the calibration settings, the required surface of the building wall 13 may comprise the whole of the building wall 13 or only an outer strip of a predetermined width.

In a further step 63, which may be executed during and/or after the step of moving along the calibration path, the image capturing module 42 determines zero or more no-scan zones 17 on the building wall, which do not need to be scanned for defects.

In a further step 64, which may be executed during and/or after the step of moving along the calibration path 11, the image capturing module 42 determines the dimensions and the position of the building wall 13.

In a further step 65, the image capturing module computes a flight path of the UAV 10 for detecting defects in the building wall 13 along the flight path. In a decision step 66, the UAV 10 decides, based on configuration data or on user input over a remote control, whether or not to initiate a façade scan.

If no subsequent façade scan is initiated, the UAV 10 calibrates the next flight path or moves to a parking position in step 67. Otherwise, the UAV 10 moves to a starting position of the flight path in step 68.

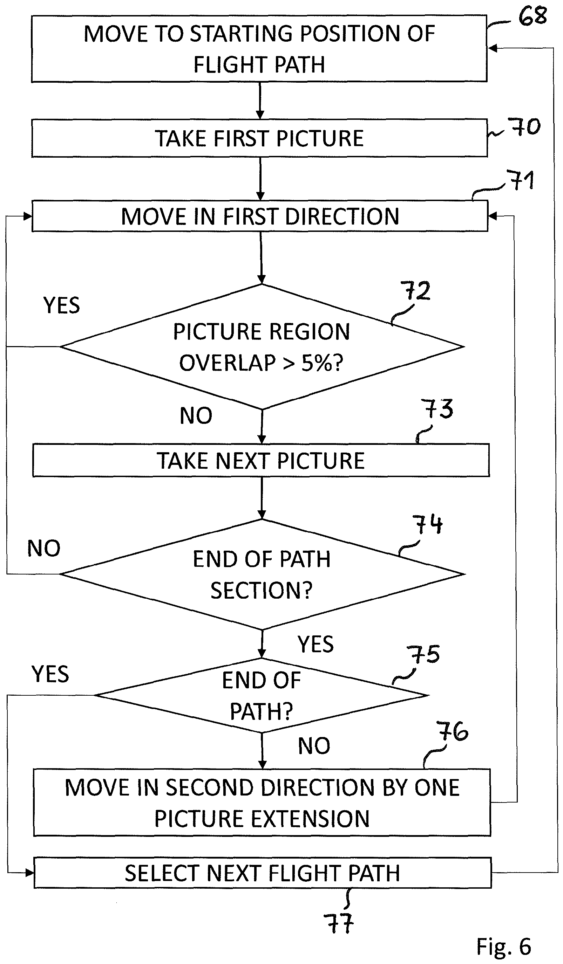

Fig. 6 shows a scanning process of the UAV 10 of Fig. 1, in which the UAV 10 follows a flight path that has been established on the basis of a preceding calibration process, for example a calibration process according to the flow diagram of Fig. 5.

In a first step 68, the UAV moves to a starting position of the flight path. In a next step 70, the image capturing module 42 sends a control signal to the camera 47 to take or capture a first picture. In a further step 71, the motor control module 41 sends control signals to the motors 50 of the UAV 10 to move the UAV 10 in a first direction.

In the case of the flight path 20 shown on the front surface 13 of the multi-level building 14 of Fig. 2, the first direction is a horizonal direction. In the case of the flight path shown on the side surface of the multi-level building 14 of Fig. 2, the first direction is a vertical direction.

In a decision step 72, the image capturing module determines the size of an overlap between adjacent image capturing areas in the first direction and whether the overlap has reached 5% of the extension of a rectangular image capturing area 29 in the first direction. If this is the case, the motor control module 41 controls the electric motors 50 of the UAV 10 to slow down or halt the UAV 10 at an image capturing position 30. In a step 73, the image capturing module 42 controls the camera 47 to capture the next picture of the building wall 13 by storing image data of the camera 47 in the image data memory 49.

In a decision step 74, the motor control module 41 of the UAV 10 compares the current position of the UAV 10 with the pre-determined path and determines whether an end of the current horizontal or vertical path segment has been reached. If not, the UAV 10 is controlled to move further in the first direction.

If it is determined that the end of the current path segment is reached, the motor control module 41 determines, in a decision step 75, whether an end of the flight path is reached. If not, the UAV 10 moves, in a step 76, in the second direction by one picture extension, which is one picture height in the case of a horizontal path segment.

Else, the UAV 10 selects the next available flight path in a step 77 and the process loops back to step 68 in which the UAV 10 moves to the starting position of the selected flight path.

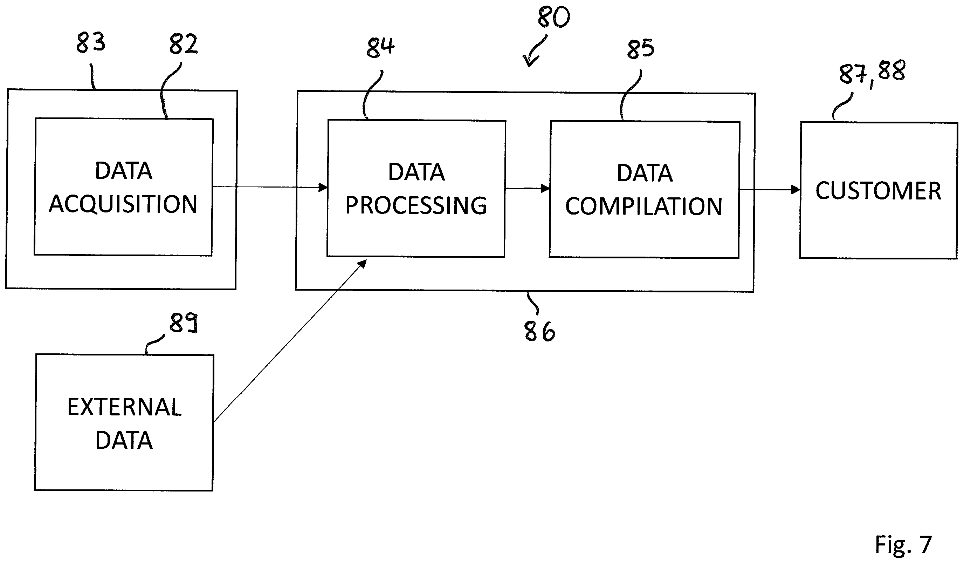

Fig. 7 shows a system 80 for the acquisition, storage and distribution of defect data which has been acquired with the UAV 10 of Fig. 1. The data acquisition, storage and distribution system 80 comprises a data acquisition module 82, which is provided by a first software application or "app" 83, a data processing module 84 and a data compilation module 85, which are provided by a second software application 86 and a client module 87, which is provided by a third software application 88.

The data processing module 84 receives input data from the data acquisition module 82 and from a source 89 of external data and stores processed data using the data compilation module 85. The client module 87 retrieves information selected by a customer using the data compilation module 85.

In one embodiment, the system 80 comprises a network of robotic devices that connect to a microservice cloud.

In a further embodiment, a customer can buy a subscription using the client module 87. As a result, the data compilation module 85 updates customer specific configuration data which causes a UAV 10 to inspect a selected building 14 in a pre-determined interval, for example monthly, to generate a request and to indicate any changes to the results of previous inspections. The inspection process is triggered automatically and is performed autonomously without the need of human intervention.

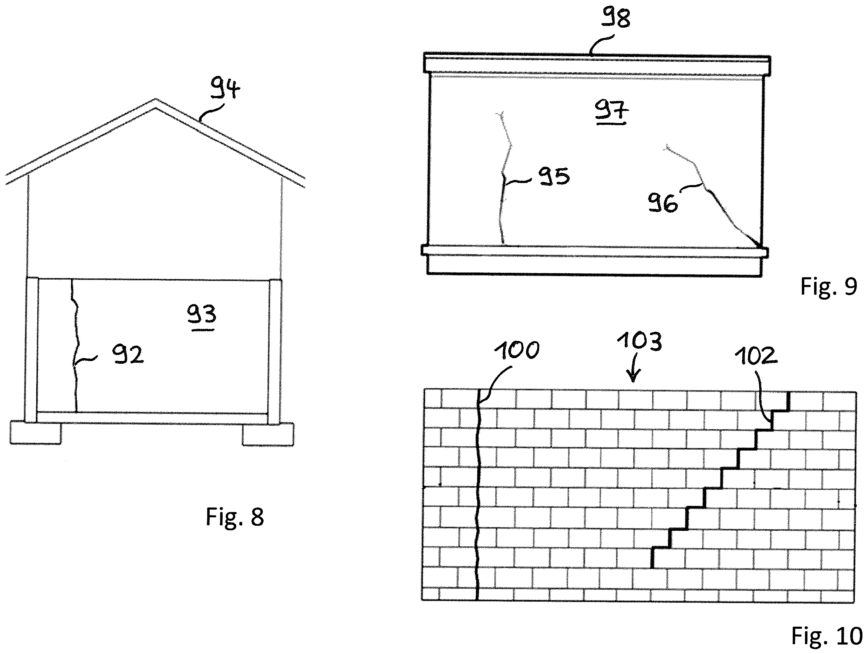

Figures 8 to 10 show, by way of example, various different types of defects in outer walls of buildings which can be detected with a defect detection system according to the present specification.

Figure 8 shows a vertical defect 92 in a wall plaster 93 of a single-family house 94.

Figure 9 shows a vertical defect 95 and a diagonal defect 96 in a concrete wall 97 of a bungalow 98.

Figure 10 shows a vertical defect 100 and a diagonal defect 102 in a masonry wall 103 of a house, which is not shown in Fig. 10. Unlike the diagonal defects of the two preceding examples, the diagonal defect of Fig. 10 follows the brick structure and comprises vertical and horizontal segments.

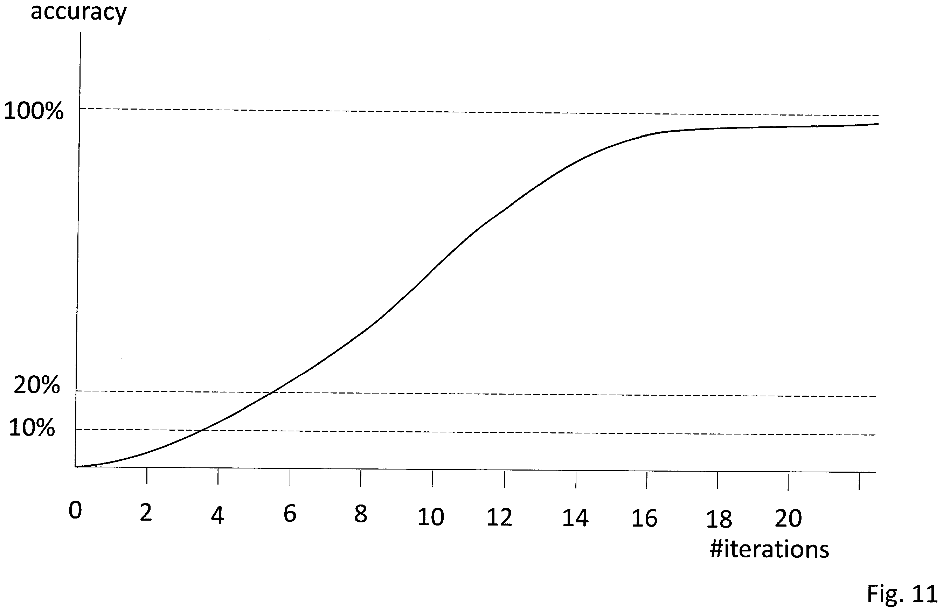

Fig. 11 shows an increase in accuracy as a function of repeated learning steps in a semi-supervised learning procedure of a neural network.

In the example of Fig. 11, the training is performed on false positive results, or in other words those pictures in which a surface feature is wrongly detected as a defect. The false positive can be caused by paint traces, twigs, shadows or other features. In Fig. 11, an accuracy of 0% means that all false positives are still wrongly detected and an accuracy of 100% means that all false positives are rejected.

By way of example, a rate of false negatives, in which a defect is present but not detected, may be 15%, a rate of false positives, in which a defect is not present but wrongly detected, may be 20%.

In general, a model training may be performed by first discarding bad images in a pre-processing stage, train the model with the pre-processed images and, in a post-processing stage, discarding outliers that do not fit into the model.

In one embodiment, a model is represented by numbers that define connection weights of a neural network, and which are modified during the training procedure. The neural network can be a network in which connections, a number of layers and a number of nodes are fixed in advance. Or, according to a more complex model, those are variable parameters of the neural network. In another embodiment, the model is represented by parameters of a statistical model which are modified during the training procedure. In one embodiment, the statistical model comprises a support vector machine, according to another embodiment, the statistical model comprises a nearest neighbour classifier.

According to a further embodiment, the UAV comprises a stereoscopic camera and the picture processing and defect recognition comprises an evaluation of depth information.

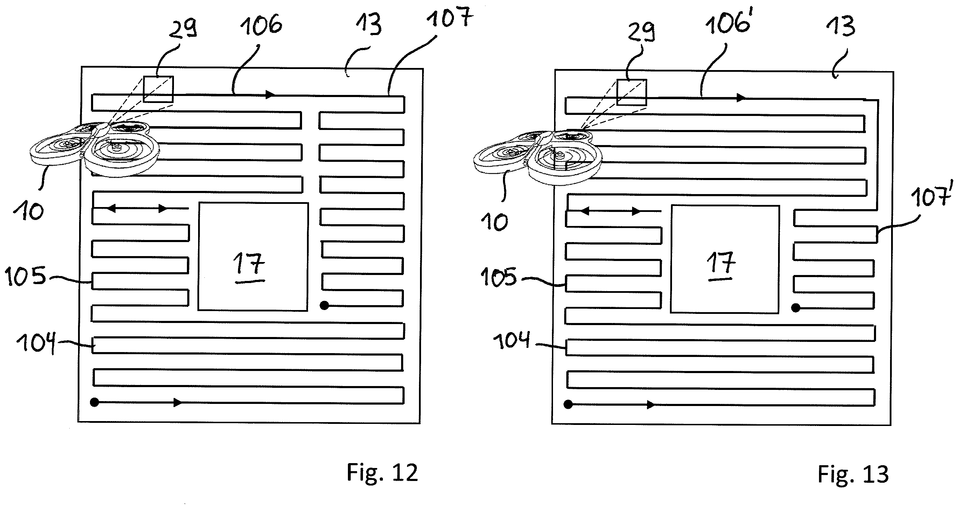

Figures 12 and 13 show first and second flight paths that are adapted to features of a building. More specifically, the flight paths are adapted to a configuration that is similar to Fig. 1, and in which there is a rectangular no-scan area 17.

The flight path of Fig. 12 comprises a first portion 104 below a no-scan area 17, in which the flight path extends over substantially the whole width of the wall 13, a second portion 105, in which the flight path extends from the left of the excluded region to the left boundary of the wall 13, a third portion 106 above the no-scan area 17, in which the flight path extends from the left boundary of the wall to the virtual extension of the right boundary of the no-scan area 17, and a fourth portion 107 in which the flight path between the right boundary of the wall and the virtual extension of the right boundary of the no-scan area 17.

In the flight paths of Fig. 12 and 13 the UAV travels back and forth along one of the horizontal segments of the flight path. In such a case the UAV may take pictures only during the flight in one direction. Or it may take pictures in both directions, which may involve taking the same pictures twice at the same capturing locations or taking the pictures only once at alternate capturing locations.

In one embodiment, a defect detection procedure is similar to a procedure for the optical recognition of characters and comprises a reduction of a picture's colour scale or grey scale to black and white pixels, which may be represented as the binary numbers 0 and 1.

A processing of the captured pictures may be executed on a processing means of the UAV 10, on a ground-based computer or partially on the UAV 10 and partially on the ground-based computer. This processing may involve an image pre-processing stage in which image distortions resulting from a lens shape and/or from an oblique orientation of a camera image plane relative to the scanned wall are removed.

In one embodiment, the image processing involves the computation of defect specific features such as a general direction or "skeleton" of the defect and a defect width

Fig. 13 shows a flight path which is similar to the flight path of Fig. 12 but in which a third portion 106' above the no-scan region extends over substantially the whole width of the wall. As a consequence, the UAV's flight path has less directional changes and up-and-down movements as compared to the flight path of Fig. 12. As a further consequence, the flight path of Fig. 13 has a vertical connecting segment which extends from the upper boundary of the wall to the virtual extension of the upper boundary of the no-scan area 17 and which is substantially higher than a height of the capturing area 29.

**Reference Numerals**

| | | | |
|---|---|---|---|
| 10 | quadcopter/UAV | 51 | data transfer connector |
| 11 | flight path | 53 | data line |
| 12 | path segment | 54 | position sensing module |
| 13 | building wall | 60 | method step |
| 14 | multi-level building | 61 | method step |
| 15 | capturing area | 62 | method step |
| 16 | scan area | 63 | method step |
| 17 | no-scan area | 64 | method step |
| 20 | flight path | 65 | method step |
| 21 | capturing segment | 66 | decision step |
| 22 | connection segment | 67 | method step |
| 24 | flight path | 68 | method step |
| 25 | capturing segment | 70 | method step |
| 26 | connection segment | 71 | method step |
| 29 | capturing area | 72 | decision step |
| 30 | capturing position | 73 | method step |
| 32 | horizontal overlap region | 74 | decision step |
| | | 75 | decision step |
| 33 | vertical overlap region | 76 | method step |
| 35 | wall defect | 77 | method step |
| 40 | battery | 80 | software application |
| 42 | image capturing module | 82 | data acquisition module |
| 43 | charging connector | 83 | software application |
| 44 | charging module | 84 | data processing module |
| 45 | control line | 85 | data compilation module |
| 46 | data line | 87 | client module |
| 47 | camera | 88 | software application |
| 48 | data line | 89 | external data source |
| 49 | image data memory | 93 | wall plaster |
| 50 | motor | 94 | house |
| 95 | vertical defect | 104 | flight path portion |
| 96 | diagonal defect | 105 | flight path portion |
| 97 | concrete wall | 106, 106' | flight path por-tion |
| 98 | bungalow | | |
| 100 | vertical defect | 107, 107' | flight path por-tion |
| 102 | diagonal defect | | |
| 103 | brick wall | | |

## Claims

1. A UAV (10) for detecting cracks (35) in a wall (13) of a building (14), the UAV (10) comprising
- a propulsion means (50) for flying the UAV (10),
- a digital camera (47) for capturing pictures of the wall (13),
- a flight control module (41), the flight control module (41) being operative to control the propulsion means (50) based on image data of the digital camera (47), such that the UAV (10) flies along the wall (13) of the building along a pre-determined flight path (20,24),
- an image capturing module (42), wherein the flight control module (41) is operative to control the propulsion means (50) and wherein the image capturing module (42) is operative to control the digital camera (47) such that adjacent pictures captured by the digital camera (47) have an overlap in a predetermined range,
the UAV (10) further comprises a processor for identifying at least one no-scan area (17) of the wall (13) to determine the pre-determined flight path (20,24),
**characterised in that**
the overlap of the adjacent pictures is between 5% and 10%.

2. The UAV (10) of claim 1, wherein the image capturing module (42) is operative to control the digital camera (47) to capture pictures of the wall (13) from pre-determined capturing positions (30).

3. The UAV (10) of claim 2, wherein a motor control module (41) is operative to slow down the movement of the UAV (10) at the pre-determined capturing positions (30).

4. The UAV (10) of claim 2 or claim 3, wherein a distance between two adjacent capturing position is equal to an extension of a capturing area of a captured picture in a flight direction of the UAV (10) minus a pre-determined overlap (23,33) in the flight direction, wherein the predetermined overlap (23,33) is within the pre-determined range.

5. The UAV (10) of claim 4, wherein the motor control module (41) controls the propulsion means (50) such that the pre-determined flight path (20,24) results in a corresponding scanning path, the scanning path comprising a meandering path, the meandering path comprising capturing segments in a first direction and connecting segments in a second direction, the capturing segments being joined by the connecting segments.

6. The UAV (10) according to one of the preceding claims, wherein the digital camera (47) comprises a visible light sensor.

7. The UAV (10) according to one of the preceding claims, wherein the digital camera (47) comprises a radar sensor.

8. The UAV (10) according to one of the preceding claims, wherein the digital camera (47) comprises an infrared sensor.

9. The UAV (10) according to one of the preceding claims, wherein the digital camera (47) comprises an acoustic transducer.

10. Method for controlling a UAV (10) with a digital camera (47), the method comprising:
- identifying at least one no-scan area (17) of the wall (13) to determine a pre-determined flight path (20,24),
- controlling a propulsion means (50) of the UAV (10) to move the UAV (10) along the pre-determined flight path (20,24),
- controlling the digital camera (47) to capture pictures of a wall (13) of a building at pre-determined capturing positions (30), such that adjacent pictures of the captured pictures have an overlap in a predetermined range,
**characterised in that**
the overlap of the adjacent pictures is between 5% and 10%.

11. The method according to claim 10, comprising
- controlling the propulsion means (50) to slow down the movement of the UAV (10) at the pre-determined capturing positions (30).

12. The method according to claim 10, comprising
controlling the propulsion means (50) such that a distance between two adjacent capturing positions is equal to an extension of a capturing area of a captured picture in a flight direction of the UAV (10) minus a pre-determined overlap (23,33) in the flight direction, wherein the predetermined overlap (23,33) is within the pre-determined range.

13. The method according to one of the claims 10 to 12, comprising
controlling the propulsion means (50) such that the pre-determined flight path (20,24) results in a corresponding scanning path, the scanning path comprising a meandering path, the meandering path comprising capturing segments in a first direction and connecting segments in a second direction, the capturing segments being joined by the connecting segments.

## Patentansprüche

1. Unbemanntes Luftfahrzeug (10) zum Erkennen von Rissen (35) in einer Wand (13) eines Gebäudes (14), wobei das unbemannte Luftfahrzeug (10) aufweist:
- ein Antriebsmittel (50) zum Fliegen des unbemannten Luftfahrzeugs (10),
- eine Digitalkamera (47) zum Aufnehmen von Bildern der Wand (13),
- ein Flugsteuermodul (41), wobei das Flugsteuermodul (41) betriebsfähig ist, um das Antriebsmittel (50) basierend auf Bilddaten der Digitalkamera (47) so zu steuern, dass das unbemannte Luftfahrzeug (10) entlang der Wand (13) des Gebäudes entlang eines vorbestimmten Flugwegs (20, 24) fliegt,
- ein Bildaufnahmemodul (42), wobei das Flugsteuermodul (41) betriebsfähig ist, um das Antriebsmittel (50) zu steuern, und wobei das Bildaufnahmemodul (42) betriebsfähig ist, um die Digitalkamera (47) so zu steuern, dass benachbarte Bilder, die von der Digitalkamera (47) aufgenommen wurden, eine Überlappung in einem vorbestimmten Bereich besitzen,
wobei das unbemannte Luftfahrzeug (10) zudem einen Prozessor zum Identifizieren mindestens eines nicht zu prüfenden Bereichs (17) der Wand (13) aufweist, um den vorbestimmten Flugweg (20, 24) zu bestimmen,
**dadurch gekennzeichnet, dass**
die Überlappung der benachbarten Bilder zwischen 5% und 10% liegt.

2. Unbemanntes Luftfahrzeug (10) nach Anspruch 1, wobei das Bildaufnahmemodul (42) betriebsfähig ist, um die Digitalkamera (47) zu steuern, Bilder der Wand (13) von vorbestimmten Aufnahmepositionen (30) aufzunehmen.

3. Unbemanntes Luftfahrzeug (10) nach Anspruch 2, wobei ein Motorsteuermodul (41) betriebsfähig ist, um die Bewegung des unbemannten Luftfahrzeugs (10) an den vorbestimmten Aufnahmepositionen (30) zu verlangsamen.

4. Unbemanntes Luftfahrzeug (10) nach Anspruch 2 oder Anspruch 3, wobei ein Abstand zwischen zwei benachbarten Aufnahmepositionen gleich einer Ausdehnung eines Aufnahmebereichs eines aufgenommenen Bildes in einer Flugrichtung des unbemannten Luftfahrzeugs (10) abzüglich einer vorbestimmten Überlappung (23, 33) in Flugrichtung ist, wobei die vorbestimmte Überlappung (23, 33) innerhalb des vorbestimmten Bereichs liegt.

5. Unbemanntes Luftfahrzeug (10) nach Anspruch 4, wobei das Motorsteuermodul (41) das Antriebsmittel (50) so steuert, dass der vorbestimmte Flugweg (20, 24) einen entsprechenden Prüfweg ergibt, wobei der Prüfweg einen mäandernden Weg aufweist, wobei der mäandernde Weg Aufnahmesegmente in einer ersten Richtung und Verbindungssegmente in einer zweiten Richtung aufweist, wobei die Aufnahmesegmente durch die Verbindungssegmente verbunden sind.

6. Unbemanntes Luftfahrzeug (10) nach einem der vorhergehenden Ansprüche, wobei die Digitalkamera (47) einen Sensor für sichtbares Licht aufweist.

7. Unbemanntes Luftfahrzeug (10) nach einem der vorhergehenden Ansprüche, wobei die Digitalkamera (47) einen Radarsensor aufweist.

8. Unbemanntes Luftfahrzeug (10) nach einem der vorhergehenden Ansprüche, wobei die Digitalkamera (47) einen Infrarotsensor aufweist.

9. Unbemanntes Luftfahrzeug (10) nach einem der vorhergehenden Ansprüche, wobei die Digitalkamera (47) einen akustischen Wandler aufweist.

10. Verfahren zum Steuern eines unbemannten Luftfahrzeugs (10) mit einer Digitalkamera (47), wobei das Verfahren aufweist:
- Identifizieren mindestens eines nicht zu prüfenden Bereichs (17) der Wand (13), um einen vorbestimmten Flugweg (20, 24) zu bestimmen,
- Steuern eines Antriebsmittels (50) des unbemannten Luftfahrzeugs (10), um das unbemannte Luftfahrzeug (10) entlang des vorbestimmten Flugwegs (20, 24) zu bewegen,
- Steuern der Digitalkamera (47), um Bilder einer Wand (13) eines Gebäudes an vorbestimmten Aufnahmepositionen (30) aufzunehmen, so dass benachbarte Bilder der aufgenommenen Bilder eine Überlappung in einem vorbestimmten Bereich besitzen,
**dadurch gekennzeichnet, dass**
die Überlappung der benachbarten Bilder zwischen 5% und 10% liegt.

11. Verfahren nach Anspruch 10, aufweisend
- Steuern des Antriebsmittels (50), um die Bewegung des unbemannten Luftfahrzeugs (10) an den vorbestimmten Aufnahmepositionen (30) zu verlangsamen.

12. Verfahren nach Anspruch 10, aufweisend Steuern des Antriebsmittels (50) derart, dass ein Abstand zwischen zwei benachbarten Aufnahmepositionen gleich einer Ausdehnung eines Aufnahmebereichs eines aufgenommenen Bildes in einer Flugrichtung des unbemannten Luftfahrzeugs (10) abzüglich einer vorbestimmten Überlappung (23, 33) in der Flugrichtung ist, wobei die vorbestimmte Überlappung (23, 33) innerhalb des vorbestimmten Bereichs liegt.

13. Verfahren nach einem der Ansprüche 10 bis 12, aufweisend Steuern des Antriebsmittels (50) derart, dass der vorbestimmte Flugweg (20, 24) einen entsprechenden Prüfweg ergibt, wobei der Prüfweg einen mäandernden Weg aufweist, wobei der mäandernde Weg Aufnahmesegmente in einer ersten Richtung und Verbindungssegmente in einer zweiten Richtung aufweist, wobei die Aufnahmesegmente durch die Verbindungssegmente verbunden sind.

## Revendications

1. Aéronef sans pilote (10) pour détecter des fissures (35) dans un mur (13) d'un bâtiment (14), l'aéronef sans pilote (10) comprenant
- un moyen de propulsion (50) pour faire voler l'aéronef sans pilote (10),
- un appareil photo numérique (47) pour capturer des images du mur (13),
- un module de commande de vol (41), le module de commande de vol (41) étant opérationnel pour commander le moyen de propulsion (50) sur la base des données d'image de l'appareil photo numérique (47), de sorte que l'aéronef sans pilote (10) vole le long du mur (13) du bâtiment le long d'une trajectoire de vol prédéterminée (20, 24),
- un module de capture d'images (42), dans lequel le module de commande de vol (41) est opérationnel pour commander le moyen de propulsion (50) et dans lequel le module de capture d'images (42) est opérationnel pour commander l'appareil photo numérique (47) de manière à ce que des images adjacentes capturées par l'appareil photo numérique (47) comprennent un chevauchement dans une plage prédéterminée,
l'aéronef sans pilote (10) comprenant en outre un processeur permettant d'identifier au moins une zone sans balayage (17) du mur (13) afin de déterminer la trajectoire de vol prédéterminée (20, 24),
**caractérisé en ce que**
le chevauchement des images adjacentes est compris entre 5% et 10%.

2. Aéronef sans pilote (10) selon la revendication 1, dans lequel le module de capture d'images (42) est opérationnel pour commander l'appareil photo numérique (47) afin de capturer des images du mur (13) à partir de positions de capture prédéterminées (30).

3. Aéronef sans pilote (10) selon la revendication 2, dans lequel un module de commande de moteur (41) est opérationnel pour ralentir le mouvement de l'aéronef sans pilote (10) aux positions de capture prédéterminées (30).

4. Aéronef sans pilote (10) selon la revendication 2 ou la revendication 3, dans lequel une distance entre deux positions de capture adjacentes est égale à une extension d'une zone de capture d'une image capturée dans une direction de vol de l'aéronef sans pilote (10) moins un chevauchement prédéterminé (23,33) dans la direction de vol, dans lequel le chevauchement prédéterminé (23,33) est dans la plage prédéterminée.

5. Aéronef sans pilote (10) selon la revendication 4, dans lequel le module de commande de moteur (41) commande le moyen de propulsion (50) de sorte que la trajectoire de vol prédéterminée (20, 24) donne une trajectoire de balayage correspondante, la trajectoire de balayage comprenant une trajectoire sinueuse, la trajectoire sinueuse comprenant des segments de capture dans une première direction et des segments de connexion dans une deuxième direction, les segments de capture étant reliés par les segments de connexion.

6. Aéronef sans pilote (10) selon l'une des revendications précédentes, dans lequel l'appareil photo numérique (47) comprend un capteur de lumière visible.

7. Aéronef sans pilote (10) selon l'une des revendications précédentes, dans lequel l'appareil photo numérique (47) comprend un capteur radar.

8. Aéronef sans pilote (10) selon l'une des revendications précédentes, dans lequel l'appareil photo numérique (47) comprend un capteur infrarouge.

9. Aéronef sans pilote (10) selon l'une des revendications précédentes, dans lequel l'appareil photo numérique (47) comprend un transducteur acoustique.

10. Méthode de commander un aéronef sans pilote (10) avec un appareil photo numérique (47), la méthode comprenant :
- identifier au moins une zone sans balayage (17) du mur (13) pour déterminer une trajectoire de vol prédéterminée (20,24),
- commander un moyen de propulsion (50) de l'aéronef sans pilote (10) pour déplacer l'aéronef sans pilote (10) le long de la trajectoire de vol prédéterminée (20, 24),
- commander l'appareil photo numérique (47) pour capturer des images d'un mur (13) d'un bâtiment à des positions de capture prédéterminées (30), de sorte que des images adjacentes des images capturées comprennent un chevauchement dans une plage prédéterminée, **caractérisée en ce que**
le chevauchement des images adjacentes est compris entre 5% et 10%.

11. Méthode selon la revendication 10, comprenant
- commander le moyen de propulsion (50) pour ralentir le mouvement de l'aéronef sans pilote (10) aux positions de capture prédéterminées (30).

12. Méthode selon la revendication 10, comprenant
commander le moyen de propulsion (50) de sorte qu'une distance entre deux positions de capture adjacentes est égale à une extension d'une zone de capture d'une image capturée dans une direction de vol de l'aéronef sans pilote (10) moins un chevauchement prédéterminé (23,33) dans la direction de vol, dans laquelle le chevauchement prédéterminé (23,33) est dans la plage prédéterminée.

13. Méthode selon l'une des revendications 10 à 12, comprenant
commander le moyen de propulsion (50) de sorte que la trajectoire de vol prédéterminée (20,24) donne une trajectoire de balayage correspondante, la trajectoire de balayage comprenant une trajectoire sinueuse, la trajectoire sinueuse comprenant des segments de capture dans une première direction et des segments de connexion dans une deuxième direction, les segments de capture étant reliés par les segments de connexion.
